# EUROPEAN PATENT APPLICATION

(11) **EP 1 953 622 A1**
(43) Date of publication of application: **06.08.2008**
(21) Application number: 07002266.0
(22) Date of filing: 02.02.2007
(51) Int. Cl.: G06F 3/023

(54) **Handeld electronics device including predictive accent mechanism, and associated method**

(71) Applicant: Research In Motion Limited, Waterloo, Ontario N2L 3W8 (CA)
(72) Inventor: Rybak, Michal, Prospect, St. James (BB)
(74) Representative: Roberts, Gwilym Vaughan

(57) **Abstract**

A method for automatically adding one or more diacritical marks to text that has been entered into a handheld electronic is disclosed. The method includes detecting an input of the text, generating an output of the text, making a determination whether the text may require diacritical marks, and generating an output of the text with the diacritical marks. A handheld electronic device having the capability described above is also disclosed.

## Description

### BACKGROUND

### Field

The disclosed and claimed concept relates generally to handheld electronic devices and, more particularly, to a method of enabling input on a handheld electronic device.

### Description of the Related Art

Numerous types of handheld electronic devices are known. Examples of such handheld devices include, for instance, personal data assistants (PDAs), handheld computers, two-way pagers, cellular telephones, and the like. Many handheld electronic devices also feature wireless communication capability, although many such handheld devices are stand-alone devices that are functional without communication with other devices.

Handheld electronic devices are used in a variety of language settings. Accordingly, these devices can be programmed with language specific dictionaries that allow the device to spell check entered text and, in some cases of reduce keyboards, to disambiguate an ambiguous input. However, many languages that use an extended Latin character set require diacritical marks. Unfortunately, users writing in such a language (e.g., French, Spanish, German, Romanian, Danish, Norwegian, Swedish, Turkish, Chinese, Irish, Italian, Portuguese, Vietnamese, or Polish) often do not include diacritical marks in the text that they enter since manually entering diacritical marks into a handheld device is often cumbersome and time consuming.

### BRIEF DESCRIPTION OF THE DRAWINGS

A full understanding can be gained from the following Description when read in conjunction with the accompanying drawings in which:

FIG. 1 is a top plan view of an improved handheld electronic device in accordance with a first embodiment of the disclosed and claimed concept;

FIG. 2 is a schematic depiction of the improved handheld electronic device of FIG. 1;

FIG. 3 is a flowchart depicting one embodiment of a method in accordance with the disclosed and claimed concept;

FIG. 4 is a flowchart depicting another embodiment of a method in accordance with the disclosed and claimed concept; and

FIG. 5 is a top plan view of an improved handheld electronic device in accordance with a second embodiment of the disclosed and claimed concept.

### DESCRIPTION

The accompanying figures and the description that follows set forth the disclosed and claimed concept in its preferred embodiments. It is, however, contemplated that persons generally familiar with handheld electronic devices will be able to apply the novel characteristics of the methods illustrated and described herein in other contexts by modification of certain details. Accordingly, the figures and description are not to be taken as restrictive on the scope of the disclosed and claimed concept, but are to be understood as broad and general teachings.

When referring to the term "reduced" and variations thereof in the context of a keyboard, a keypad, or other arrangement of input members, such designations shall refer broadly to an arrangement in which at least one of the input members has assigned thereto a plurality of linguistic elements such as, for example, characters in the set of Latin letters.

When referring to the term "diacritical marks" or variations thereof, such designations refer to marks that are added to a letter to indicate a special pronunciation or added to a letter such that the modified letter is treated as a new individual letter.

When referring to the term "text" or variations thereof, such designations include not only a body of words but it also refers to a phrase of words, a single word or a portion of a word.

When referring to phrase "language rule set" and variations thereof, such designations broadly refer to the grammatical rules for a given language.

For purposes of the description hereinafter, the terms "upper", "lower", "right", "left", "vertical", "horizontal", "top", "bottom", and derivatives thereof shall relate to the disclosed and claimed concept as it is oriented in the figures.

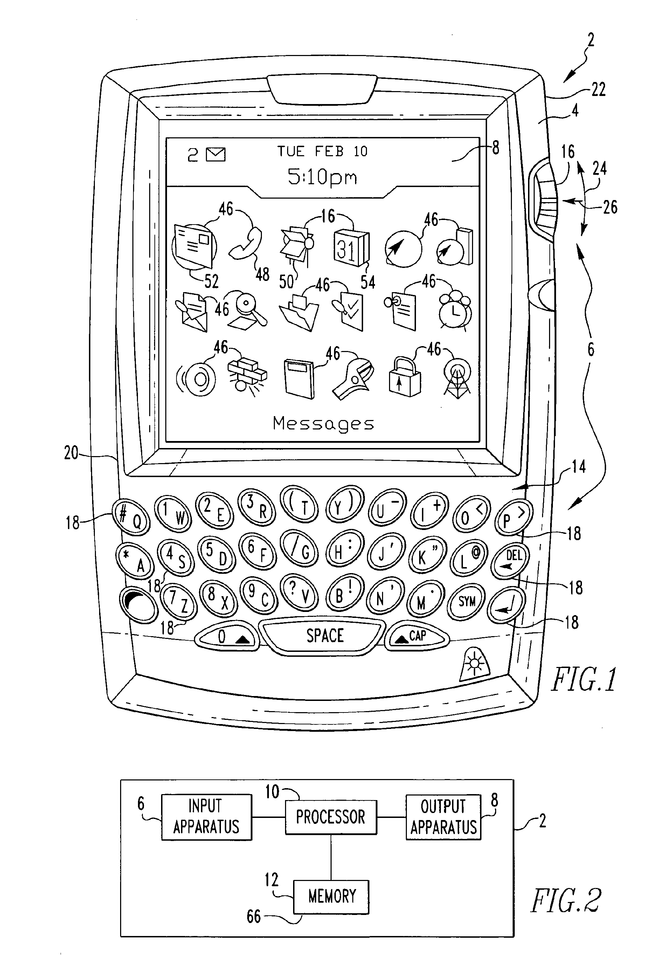

An improved handheld electronic device 2 is indicated generally in FIG. 1 and is depicted schematically in FIG. 2. The exemplary handheld electronic device 2 includes a housing 4 upon which are disposed a processor unit that includes an input apparatus 6, an output apparatus 8, a processor 10, and a memory 12. The processor 10 may be, for instance, and without limitation, a microprocessor (µP) and is responsive to inputs from the input apparatus 6 and provides output signals to the output apparatus 8. The processor 10 also interfaces with the memory 12. The processor 10 and the memory 12 together form a processor apparatus.

As can be understood from FIG. 1, the input apparatus 6 includes a keypad 14 and a trackwheel 16. As will be described in greater detail below, the keypad 14 is in the exemplary form of a QWERTY keyboard including a plurality of keys 18 that serve as input members. It is noted, however, that the keypad 14 may be of other configurations, such as an AZERTY keyboard, a reduced QWERTY keyboard, or another keyboard arrangement, whether presently known or unknown, and either reduced or not reduced.

The system architecture of the handheld electronic device 2 advantageously is organized to be operable independent of the specific layout of the keypad 14. Accordingly, the system architecture of the handheld electronic device 2 can be employed in conjunction with virtually any keypad layout without requiring any meaningful change in the system architecture. It is further noted that certain of the features set forth herein are usable on either or both of a reduced keyboard and a nonreduced keyboard.

The keys 18 are located on a front face 20 of the housing 4, and the trackwheel 16 is located at a side 22 of the housing 4. In addition to the keys 18, the trackwheel 16 can serve as another input member since the trackwheel 16 is capable of being rotated, as indicated by arrow 24, and depressed generally toward the housing 4, as indicated by arrow 26. Rotation of the trackwheel 16 provides selection inputs to the processor 10, while depression of the trackwheel 16 provides another selection input to the processor 10.

The memory 12 is depicted schematically in FIG. 2. The memory 12 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. As can be seen from FIG. 2, the memory 12 is in electronic communication with the processor 10. The memory 12 additionally can include one or more routines depicted generally with the numeral 66 for the processing of data. The routines 66 can be in any of a variety of forms such as, without limitation, software, firmware, and the like. As will be explained in greater detail below, the routines 66 include a routine that can be executed to perform a method in accordance with the disclosed and claimed concept as well as other routines that are utilized by the handheld electronic device 2. Additionally, the memory 12 can also store a variety of data sources such as, without limitation, a language dictionary or a language rule set.

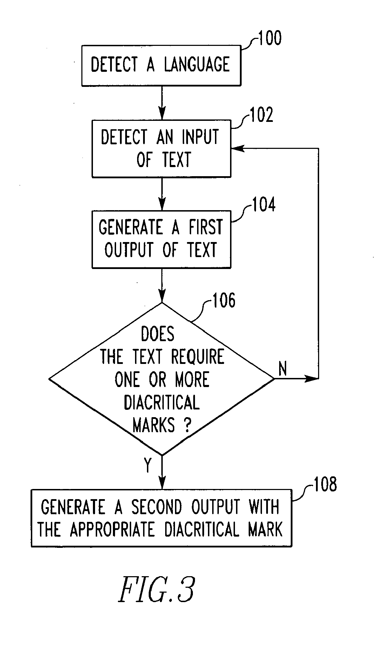

In order to facilitate the entry of one or more diacritical marks into text that is being or has been entered into a handheld electronic device 2, the disclosed concept provides a method of operation in which the handheld electronic device 2 has the capability of automatically inserting the diacritical marks into the text. The handheld electronic device 2 includes one or more routines 66, stored in memory 12 and executable by the processor 10, for implementing the disclosed method. A flowchart depicting one embodiment of the routine 66 is depicted in FIG. 3.

As can be understood from FIG. 3, the routine begins at step 100, where the handheld electronic device 2 detects a language and accesses a language dictionary and/or language rule set that corresponds to the detected language. The method of detecting the language can be done in a variety of ways. For instance, in one embodiment the language is detected by using metadata associated with a particular piece of data. To illustrate, if the user is replying to a message that the user received on the handheld electronic device 2 (referred to as an "original message"), then the language can be determined from the metadata (e.g. language identifier) associated with the original message. In another embodiment, the language can also be obtained heuristically by scanning the text of original message. For instance, the handheld electronic device 2 can scan the text of the original message and compare the scanned text with multiple dictionaries and/or language rule sets that are stored in the handheld electronic device 2 thereby deriving the appropriate language. In yet another embodiment, the user manually selects the language thereby enabling the handheld electronic device 2 to access the dictionary and/or language rule set that corresponds to the selected language. It is noted, however, that the step of detecting the language can occur at anytime prior to the step of determining whether the entered text requires diacritical marks.

Once the language has been detected at step 100, the handheld electronic device 2 then detects, as at step 102, an input of text. After the handheld electronic device 2 detects the input of text, the handheld electronic device 2 generates, as at step 104, a first output of the text on the output apparatus 8. The handheld electronic device 2 then determines, as at step 106, whether the text requires diacritical marks. This is preferably done by accessing a language dictionary and/or a language rule set which corresponds to the detected language at step 100. For example, in the Spanish language the word "también" has a diacritical mark (i.e. accent mark) over the letter the letter "E". After the word "tambien" has been detected by the handheld electronic device 2, the handheld electronic device 2 will access a Spanish dictionary and/or a Spanish language rule set to determine whether the word "tambien" requires a diacritical mark.

If the handheld electronic device 2 does determine, at step 106, that the text requires diacritical marks, then the handheld electronic device 2 automatically generates, as at step 108, a second output of the text with the appropriate diacritical marks on the output apparatus 8. In this case where the user entered "tambien" into the handheld electronic device 2, the handheld electronic device 2 will generate, as the second output, the word "también". If, however, the handheld electronic device 2 determines, at step 106, that the text does not require diacritical marks, then the handheld electronic device 2 returns to step 102.

In one exemplary embodiment of the disclosed concept, the language (predetermined language) is French, Spanish, German, Romanian, Danish, Norwegian, Swedish, Turkish, Chinese, Irish, Italian, Portuguese, Vietnamese, or Polish.

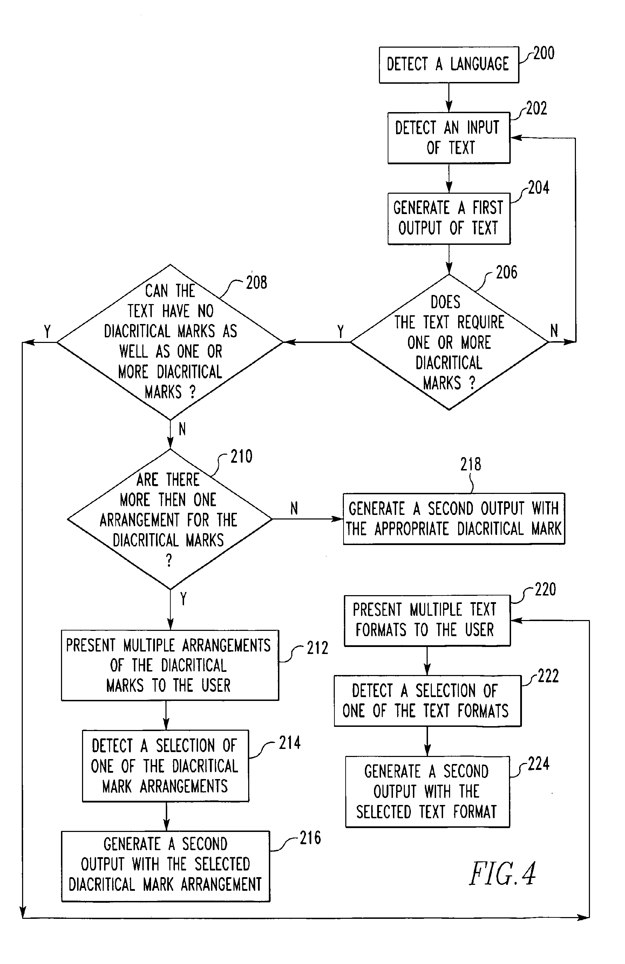

FIG. 4 depicts the general operation of yet another embodiment of an improved method in accordance with the disclosed and claimed concept. In this particular embodiment, steps 200, 202, 204, 206, and 218 correspond to steps 100, 102, 104, 106, and 108 of FIG. 3 respectively. Accordingly, the description of steps 100, 102, 104, 106, and 108 in the preceding paragraphs will also apply to their counterparts in FIG. 4.

Unlike the embodiments depicted in FIG. 3, the embodiment depicted in FIG. 4 includes the step of determining, as at step 208, whether the text can have no diacritical marks as well as one or more diacritical marks.

If the handheld electronic device 2 determines, at step 208, that the text can only have diacritical marks, then the handheld electronic device 2 will determine, at step 210, whether there are more than two arrangements for the diacritical marks.

If the handheld electronic device 2 does determine, at step 210, that the diacritical marks can have two or more arrangements, then the handheld electronic device 2 will present, as at step 212, the user with the multiple arrangements of the diacritical marks by displaying a selection box on the output apparatus 8 containing all of the possible diacritical mark arrangements. The handheld electronic device 2 will then detect, as at step 214, the selection of one of the diacritical mark arrangements from the selection box. After the user had made a selection, at step 214, the handheld electronic device 2 will output, as at step 216, the selected diacritical mark arrangement.

If the handheld electronic device 2 determines that there is only one arrangement for the diacritical mark, then the handheld electronic device 2 will, at step 218, automatically generate a second output of the text with the appropriate diacritical mark on the output apparatus 8.

If the handheld electronic device, at step 208, determines that the text can have no diacritical marks as well as one or more diacritical marks, then the handheld electronic device 2 will present, as at step 220, to the user a selection box on the output apparatus 8 containing all of the possible text formats (i.e. text without diacritical marks as well as text with one or more diacritical marks). To illustrate, in French the word "mange" can also be written as "mangé". Therefore, the handheld electronic device 2 will display both words in the selection box so that they user may select the desired text format. The handheld electronic device 2 will then detect, as at step 222, the selection of one of the text formats from the selection box. After the user had made a selection, at step 222, the handheld electronic device 2 will output, as at step 224, the selected text format.

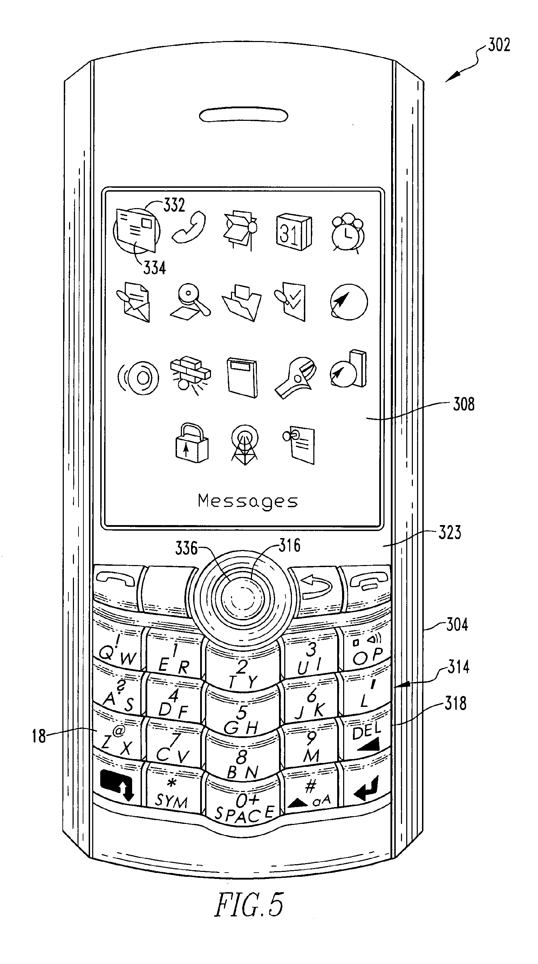

Referring to FIG. 5, unlike the handheld electronic device 2 that is depicted in FIG. 1, a handheld electronic device 302 has a keypad 314 that is in the form of a reduced QWERTY keyboard which has a plurality of keys 318 that serve as input members. In this embodiment of the handheld electronic device 302, a navigational input 316 is not disposed on a side of the housing 304. Rather, the navigational input 316, which is a trackball 336, is disposed on a front face 323 of the housing 304. The trackball 336 is freely rotatable thereby allowing for the navigation of the cursor 332, which is displayed on the output apparatus 308, in various directions including up, down, left, right, and any combination thereof. Moreover, the trackball 336 can also be depressed inwardly toward the housing 304 to provide a selection input. When the trackball 336 is depressed, a selection is made based upon the current location of the cursor 332. Accordingly, rotation of the trackball 336 can provide navigational inputs to navigate the cursor 332 over a particular program icon 334, while depression or other actuation of the trackball 336 provides a selection input that can launch the application associated with the particular program icon 334, for instance. All of the features implemented on the handheld electronic device 2 can be implemented on the handheld electronic device 302.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of enabling input on a handheld electronic device comprising:
detecting an input of text into said handheld electronic device;
generating a first output of said text;
determining whether said text may require one or more diacritical marks; and
if it is determined that said text may require one or more diacritical marks, automatically generating a second output of said text, said second output of said text including said one or more diacritical marks.

2. The method of claim 1 further comprising detecting a language for said text prior to said step of determining whether said text may require one or more diacritical marks.

3. The method of claim 2 wherein said step of detecting said language comprises detecting a selection of a predetermined language by a user of said handheld electronic device.

4. The method of claim 2 wherein said step of detecting said language comprises analyzing a metadata of a message previously received by said handheld electronic device.

5. The method of claim 2 wherein said step of detecting said language comprises analyzing heuristically a message previously received by said handheld electronic device.

6. The method of claim 2 wherein said step of determining whether said text may require one or more diacritical marks is based on said language.

7. The method of claim 2 wherein said step of determining whether said text may require one or more diacritical marks includes utilizing a dictionary stored by said handheld electronic device that corresponds to said language.

8. The method of claim 2 wherein said step of determining whether said text may require one or more diacritical marks includes utilizing a language rule set handheld electronic device that corresponds to said language.

9. The method of claim 3 further comprising detecting as said predetermined language French, Spanish, German, Romanian, Danish, Norwegian, Swedish, Turkish, Chinese, Irish, Italian, Portuguese, Vietnamese, or Polish.

10. The method of claim 1 further comprising making a determination whether there are two or more arrangements for said one or more diacritical marks in said text, wherein said second output of said text comprises a selected one of said arrangements.

11. The method of claim 1 wherein said step of determining whether said text may require one or more diacritical marks comprises determining whether said text can have at least a first proper format and a second proper format, wherein in said first proper format said text requires one or more diacritical marks and in said second proper format said text has no diacritical marks, wherein if it is determined that said text can have at least said first proper format and said second proper format, said second output comprises a selected one of said text including said one or more diacritical marks or said text having no diacritical marks.

12. A handheld electronic device comprising;
an input apparatus having a number of input members that are capable of being actuated;
a processor;
a memory in electronic communication with said processor, said memory storing one or more routines executable by said processor, said one or more routines being adapted to:
detect an input of a text;
generate a first output of said text;
make a determination whether said text may require one or more diacritical marks; and
if it is determined that said text may require one or more diacritical marks, automatically generate a second output of said text, said second output of said text including said one more diacritical marks.

13. The handheld electronic device according to claim 12 wherein said routines are further adapted to detect a language prior to said determination whether said text may require one or more diacritical marks.

14. The handheld electronic device according to claim 13 wherein said language is a predetermined language selected by a user of said handheld electronic device.

15. The handheld electronic device according to claim 13 wherein said routines are further adapted to analyze a metadata of a message previously received by said handheld in order to detect said language.

16. The handheld electronic device according to claim 13 wherein said routines are further adapted to heuristically analyze a message previously received by said handheld in order to detect said language.

17. The handheld electronic device of claim 13 wherein said determination whether said text requires said diacritical marks is based on said language.

18. The handheld electronic device according to claim 13 wherein said determination whether said text requires said diacritical marks is based on a dictionary that corresponds to said language stored by said memory.

19. The handheld electronic device according to claim 13 wherein said determination whether said text requires said diacritical marks is based on a language rule set that corresponds to said language stored by said memory.

20. The handheld electronic device according to claim 14 wherein said predetermined language is French, Spanish, German, Romanian, Danish, Norwegian, Swedish, Turkish, Chinese, Irish, Italian, Portuguese, Vietnamese, or Polish.

21. The handheld electronic device according to claim 13 wherein said routine determines whether said text can have at least a first proper format and a second proper format, wherein in said first proper format said text requires one or more diacritical marks and in said second proper format said text has no diacritical marks, wherein if it is determined that said text can have at least said first proper format and said second proper format, said second output comprises a selected one of said text including said one or more diacritical marks or said text having no diacritical marks.
